# EUROPÄISCHE PATENTSCHRIFT

(11) **EP 1 784 697 B1**
(45) Veröffentlichungstag und Bekanntmachung des Hinweises auf die Patenterteilung: **16.04.2008**
(21) Anmeldenummer: 05779836.5
(22) Anmeldetag: 04.08.2005
(51) Int. Cl.: G05B 19/042

(54) **VERFAHREN, VORRICHTUNG UND SOFTWAREMODUL ZUR SOFTWARETECHNISCHEN ABBILDUNG DES GERÄTEVERHALTENS EINES REALEN HAUSGERÄTS IN EINEM MODELL**
METHOD, DEVICE AND SOFTWARE MODULE FOR A SOFTWARE-ENGINEERED REPRODUCTION OF THE BEHAVIOUR OF AN ACTUAL DOMESTIC APPLIANCE IN A MODEL
PROCEDE, DISPOSITIF ET MODULE LOGICIEL DESTINES A LA REPRESENTATION LOGICIELLE DU COMPORTEMENT D'UN APPAREIL MENAGER REEL DANS UN MODELE

(30) Priorität: 23.08.2004 DE 102004040795
(43) Veröffentlichungstag der Anmeldung: 16.05.2007
(73) Patentinhaber: BSH Bosch und Siemens Hausgeräte GmbH, 81739 München (DE)
(72) Erfinder: ELLINGER, Michael, A-2243 Matzen (AT); HAUGENEDER, Hans, 84552 Geratskirchen (DE); WERKMANN, Horst, 85276 Pfaffenhofen/Ilm (DE)
(86) Internationale Anmeldenummer: PCT/EP2005/053825
(87) Internationale Veröffentlichungsnummer: WO 2006/021493

(56) Entgegenhaltungen:
- EP-A- 1 278 338
- BE-A6- 1 011 726
- DE-A1- 10 208 147
- DE-A1- 10 245 176
- US-A1- 2002 052 712

## Beschreibung

Die Erfindung bezieht sich auf ein Verfahren zur softwaretechnischen Abbildung des Geräteverhaltens eines realen Hausgeräts in einem Modell, welches mit dem betreffenden Hausgerät über eine bidirektionale Verbindungseinrichtung verbunden ist, über die aktuelle Zustände des betreffenden Hausgeräts an das Modell übertragen und Aktionen am Hausgerät ausgeführt werden.

Die vorliegende Erfindung betrifft ferner eine Vorrichtung zur softwaretechnischen Abbildung des Geräteverhaltens eines realen Hausgeräts in einem Modell, welches zwischen dem betreffenden Hausgerät und einem Gateway gebildet ist, dem gegebenenfalls eine Mehrzahl von Hausgeräten zugehörig ist und über das Funktionszustände des jeweiligen Hausgerätes abfragbar und/oder Informationsdaten zu dem jeweiligen Hausgerät übertragbar sind.

Die vorliegende Erfindung betrifft außerdem ein Softwaremodul zur softwaretechnischen Abbildung des Geräteverhaltens eines realen Hausgerätes in einem Modell, welches mit dem betreffenden Hausgerät über eine bidirektionale Verbindungseinrichtung verbindbar ist, über die aktuelle Zustände des betreffenden Hausgerätes an das Modell übertragbar und Aktionen am Hausgerät ausführbar sind.
Es ist bereits ein Verfahren zur Überwachung einer aus einer Vielzahl von Subsystemen bestehenden Anlage bekannt (US-6.587.737-B2). Dazu werden verschiedene Messwerte der Anlage für einen vorgegebenen Satz von Parametern in festlegbaren Intervallen während des Anlagebetriebs ermittelt. Die so in einer Lemphase ermittelten Messwerte werden zur Erstellung von Modellen für die Arbeitscharakteristiken der betreffenden Subsysteme herangezogen. Mit den betreffenden Modellen werden sodann die realen Messwerte verglichen, das heißt die Funktionsparameter der realen Anlage werden mit den in den Modellen erfassten Parametern verglichen, um gegebenenfalls Abweichungen dazwischen feststellen zu können. Über die Erstellung von Modellen des Geräteverhaltens eines realen Gerätes ist in diesem Zusammenhang indessen nichts bekannt.

Es sind ferner ein Verfahren zum rechnergestützten Erzeugen einer grafischen Benutzeroberfläche und eine Geräteüberwachungs-/Steuerungseinheit bekannt (DE 102 08 146 A1). Mit diesem Verfahren und der betreffenden Geräteüberwachungs-/Steuerungseinheit ist eine Überwachung und/oder Steuerung einer Vielzahl von Geräten auf einfache Weise unter Anwendung einer üblichen Browser-Technologie ermöglicht. Realisiert sind das betreffende Verfahren und die genannte Geräteüberwachungs-/Steuerungseinheit in einem Gebäude-Gateway, in welchem somit eine Abbildung der zugehörigen realen Gerätewelt geschaffen ist. Für die Beschreibung der Basisstrukturen wird unter anderem das XML-Format angewandt. Die in dem Gebäude-Gateway geschaffene Abbildung der zugehörigen realen Gerätewelt stellt indessen keine Abbildung des Geräteverhaltens der betreffenden Gerätewelt dar.

BE-A-1 011 7266 beschreibt ein Verfahren zur Beschreibung und Steuerung der Heimsystem-Umgebung eines Gebäudes. Es zeigt auch eine Heimsystem-Grammatik, mit welcher das Geräteverhalten deklarativ beschrieben wird. Diese Grammatik wird zum Prüfen der Syntax der Aktionen der Hausgeräte benutzt.

Es sind außerdem eine Gebäude-Gateway-Rechneranordnung und ein Steuerungssystem bekannt (DE 102 08 147 A1), also Einrichtungen, die bei dem zuvor betrachteten bekannten Verfahren und bei der zuvor betrachteten bekannten Geräteüberwachungs-/Steuerungseinheit zur Anwendung gelangen. Auch in diesem Falle sind die betreffenden Einrichtungen in einem Gebäude-Gateway realisiert, in welchem somit lediglich eine Abbildung der zugehörigen Gerätewelt geschaffen ist, nicht aber eine Abbildung des Geräteverhaltens der betreffenden Gerätewelt.

Es sind schließlich auch schon eine Vorrichtung und ein Verfahren zur Erstellung eines virtuellen Anlagenmodells bekannt (EP 1 092 210 B1). Hintergrund der betreffenden Vorrichtung und des betreffenden Verfahrens ist der Umstand, dass in der Praxis häufig der Fall auftritt, dass eine reale Anlage mit den ursprünglichen Plänen der Anlage nicht übereinstimmt, da bereits beispielsweise bei der Erstellung der Anlage spezielle Anpassungen oder Nachrüstungen durchgeführt worden sind bzw. deren Pläne nicht für die datentechnische Weiterbearbeitung notwendige Informationen enthalten. Es erfolgt also eine solche Kopplung eines virtuellen Anlagenmodells mit der realen Anlage, dass eine virtuelle Anlage 2 nicht lediglich einer statischen Visualisierung und Dokumentation einer Anlage 1 dient, sondern dass sie darüber hinaus eine Vielzahl von weiteren realen Funktionen bezüglich Information, Bedienung und Beobachtung der realen Anlage übernehmen kann. Auch in diesem Falle ist nichts konkret über eine Abbildung des Verhaltens einer realen Anlage in einem Modell bekannt.

Der Erfindung liegt die Aufgabe zugrunde, einen Weg zu zeigen, wie auf besonders einfache Weise eine softwaretechnische Abbildung des Geräteverhaltens eines realen Hausgeräts in einem Modell vorgenommen werden kann, die auch von Nicht-Softwareentwicklem durchgeführt und leicht geändert werden kann.

Gelöst wird die vorstehend aufgezeigte Aufgabe bei einem Verfahren der eingangs genannten Art erfindungsgemäß dadurch, dass das genannte Modell hinsichtlich von das Geräteverhalten angebenden Geräteparametern lediglich deklarativ beschrieben wird.

Durch die deklarative Beschreibung von das Geräteverhalten angebenden Geräteparametern in dem genannten Modell wird also beschrieben, in welchem Verhältnis die für das betreffende Geräteverhalten maßgebenden Einheiten in der realen Welt zueinander stehen. Mit anderen Worten ausgedrückt heißt dies, dass durch die betreffende deklarative Beschreibung des Geräteverhaltens eines realen Hausgeräts bzw. der das Geräteverhalten angebenden Geräteparameter eine Abstraktion erfolgt, die unabhängig von jeweils benutzten Rechnern in den Hausgeräten erfolgt, so dass diese Abbildung des Geräteverhaltens die Nutzung von beliebigen Rechnern unterstützen kann. Außerdem lässt sich durch die deklarative Beschreibung des Geräteverhaltens des jeweiligen realen Hausgeräts bzw. der das betreffende Geräteverhalten angebenden Parameter eine solche Beschreibung ohne weiteres von Nicht-Softwareentwicklem durchführen und sie ist leicht änderbar, da kein softwaretechnisches Spezial-Knowhow erforderlich ist. Überdies kann die deklarative Beschreibung des Geräteverhaltens des jeweiligen realen Hausgeräts bzw. der das betreffende Geräteverhalten angebenden Parameter auf relativ einfache Weise auf syntaktische Richtigkeit überprüft werden.

Vorzugsweise werden für die deklarative Beschreibung des genannten Modells Graphenstrukturen verwendet. Dies bringt den Vorteil einer besonders einfachen Beschreibung des betreffenden Modells mit sich.

Zweckmäßigerweise werden Gerätezustände und Übergangsbedingungen zwischen Gerätezuständen des jeweiligen Hausgeräts in einer Status-Graphen-Software festgehalten. Eine solche Software ermöglicht in vorteilhafter Weise eine Überprüfung dahingehend, ob eine bestimmte Aktion beim jeweiligen Gerätezustand des jeweiligen Hausgerätes oder mit angegebenen Parameterkombinationen ausführbar ist, und sie enthält sämtliche Informationen über verfügbare Status-Variable und Aktionen des jeweiligen Hausgeräts.

Hierdurch ergibt sich der Vorteil einer besonders einfachen Möglichkeit des Überprüfens der Ausführbarkeit von bestimmten Aktionen beim jeweiligen Gerätezustand eines Hausgeräts.

Vorzugsweise wird die softwaretechnische Abbildung durch gerätespezifische Komponenten und durch Spezifikationen realisiert, weiche die funktionalen Eigenschaften und damit das Geräteverhalten des jeweiligen Hausgeräts unter verschiedenen Aspekten beschreiben. Dies bringt den Vorteil mit sich, dass eine praktisch umfassend nutzbare Beschreibung des Geräteverhaltens des jeweiligen realen Hausgeräts und damit der das jeweilige Geräteverhalten angebenden Geräteparameter zur Verfügung stehen.

Zweckmäßigerweise werden mittels der genannten Spezifikationen Verknüpfungen (Logik) der Gerätesteuerung des jeweiligen Hausgeräts abgebildet. Hierdurch ergibt sich der Vorteil einer besonders einfachen Beschreibung und Überprüfbarkeit des Geräteverhaltens des jeweiligen Hausgeräts.

Gelöst wird die oben angegebene Aufgabe der Erfindung ferner bei einer Vorrichtung der eingangs genannten Art erfindungsgemäß dadurch, dass das genannte Modell hinsichtlich der das Geräteverhalten angebende Geräteparameter lediglich deklarativ beschrieben ist und aus einer Software-Komponente zum genannten Gateway hin und durch eine Software-Komponente zum jeweiligen Hausgerät hin sowie durch eine Spezifikationsdatenkomponente zwischen den beiden Software-Komponenten aufgebaut ist. Dies bringt den Vorteil einer besonders einfach strukturierten Modellgestaltung mit sich.

Vorzugsweise umfassen die genannten Spezifikationsdatenkomponenten eine Steuerungs-Graphen-Softwarekomponente, eine Geräteinformationskomponente und eine Zustands-Graphen-Softwarekomponente. Diese Gliederung der Spezifikationsdatenkomponenten bringt den Vorteil einer besonders einfachen systematischen Gliederung und Erfassung der betreffenden einzelnen Komponenten mit sich.

Überdies wird die oben angegebene Aufgabe durch ein Softwaremodul zur softwaretechnischen Abbildung des Geräteverhaltens eines realen Hausgerätes in einem Modell, welches mit dem betreffenden Hausgerät über eine bidirektionale Verbindungseinrichtung verbindbar ist, über die aktuelle Zustände des betreffenden Hausgerätes an das Modell übertragbar und Aktionen am Hausgerät ausführbar sind, erfindungsgemäß dadurch gelöst, dass das genannte Modell hinsichtlich der das Geräteverhalten angebende Geräteparameter lediglich deklarativ beschrieben ist. Hierdurch ergibt sich der Vorteil eines besonders einfach stukturierten Modells.

Zweckmäßige Weiterbildungen des Softwaremoduls gemäß der Erfindung sind in den Patentansprüchen 10 bis 14 erfasst.

Anhand einer Zeichnung wird nachstehend ein Ausführungsbeispiel der vorliegenden Erfindung näher erläutert.

In der Zeichnung ist schematisch eine Wohnanlage WA dargestellt, die eine einzige Wohnung oder eine Vielzahl von Wohnungen oder ein Haus umfassen kann; in dieser Wohnanlage WA befindet sich zumindest ein netzfähiges Hausgerät HG. Bei dem betreffenden Hausgerät HG kann es sich um irgendein netzfähiges Hausgerät, wie um eine Waschmaschine, einen Trockner, einen Herd, ein Kühlgerät, eine Heizungsanlage, etc. handeln. Unter einem netzfähigen Hausgerät wird hier ein Hausgerät verstanden, das mittels einer Sende- und/oder Empfangseinrichtung an einem Kommunikationsnetz NET zur Übertragung von unterschiedlichsten Datensignalen anschließbar ist. Im vorliegenden Fall umfasst dieses Kommunikationsnetz NET beispielsweise das Internet. Es ist aber selbstverständlich auch möglich, als Kommunikationsnetz NET irgendein anderes Netz, wie das Netzwechselspannungsnetz zu nutzen, aus dem die für den Betrieb des jeweiligen Hausgerätes benötigten Versorgungsspannungen bezogen werden.

In der Zeichnung ist indessen durch ein mit dem Hausgerät HG verbundenes Vielfachzeichen angedeutet, das zu der betreffenden Wohnanlage WA eine Vielzahl von Hausgeräten HG gehören kann.

Mit dem Hausgerät HG oder mit den in einer Mehrzahl vorgesehenen Hausgeräten ist im vorliegenden Fall eine bidirektionale Verbindungseinrichtung verbunden, die durch ein Softwaremodul SWM gebildet ist, in welchem, wie noch im Einzelnen erläutert wird, das Modell des Geräteverhaltens des jeweiligen Hausgeräts HG hinsichtlich von das Geräteverhalten angebenden Parametern deklarativ beschrieben wird bzw. ist. Das betreffende Softwaremodul SWM ist im vorliegenden Fall mit einem Gateway GW, also mit einer Übergangs-Schnittstelleneinrichtung der Wohnanlage WA verbunden. Dieses Gateway GW kann, wie durch ein in der Zeichnung eingetragenes Vielfachzeichen angedeutet, in einer Mehrzahl vorgesehen sein. Die betreffenden Gateways sind über bidirektionale Verbindungswege mit Verbindungsnetzen verbunden, über die zu und von den einzelnen Hausgeräten, wie dem Hausgerät HG Informationsdaten, wie aktualisierte Arbeitsprogramme übertragen und Zustandsabfragen vornehmbar sind, beispielsweise im Zuge von Ferndiagnosen. Im vorliegenden Fall ist das in der Zeichnung dargestellte Gateway GW mit dem bereits erwähnten Kommunikationsnetz NET verbunden, bei dem es sich beispielsweise um das Internet handeln kann; das betreffende Netzwerk NET kann aber auch, wie bereits erwähnt, durch das Stromversorgungsnetz gebildet sein, von dem das jeweilige Hausgerät HG seine Energie bezieht. Mit dem in der Zeichnung dargestellten Netzwerk NET ist ein Personalcomputer PC verbunden, der beispielsweise als Femdiagnosestation und/oder als Ladestation dienen kann, von der beim jeweiligen Hausgerät Fernabfragen vornehmbar sind bzw. aktualisierte Arbeitsprogramme zum jeweiligen Hausgerät HG übertragbar sind.

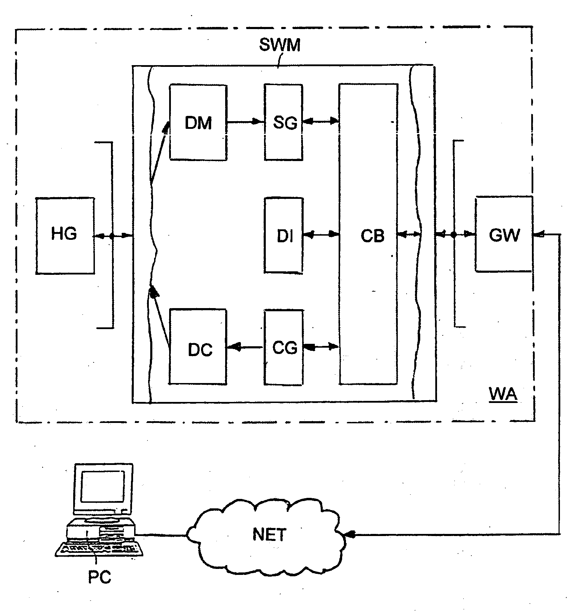

Nachdem zuvor der grundsätzliche Aufbau der in Fig. 1 dargestellten Vorrichtung erläutert worden ist, wird nunmehr der nähere Aufbau des zuvor genannten Softwaremoduls SWM betrachtet. Dieses Softwaremodul SWM ist, wie aus der Zeichnung ersichtlich ist, in drei Software-Ebenen gegliedert. Die Ebene zum jeweiligen Hausgerät HG hin umfasst eine Softwarekomponente, die aus einer Gerätemodell-Software DM in der Verbindungsrichtung vom jeweiligen Hausgerät HG weg und aus einer Gerätesteuerungs-Software DC zum jeweiligen Hausgerät HG hin besteht. Auf die Aufgaben und Funktionsweisen dieser Softwaremoduln wird weiter unten noch näher eingegangen.

Auf der Seite zum jeweiligen Gateway GW hin weist das Softwaremodul SWM eine Steuereinheits-Architekturbrücke CB auf, die bidirektional mit dem jeweiligen Gateway GW in Verbindung steht. Die Aufgaben und Funktionen auch dieser Steuereinheits-Architekturbrücke CB werden weiter unten im Einzelnen erläutert werden.

Zwischen den vorstehend betrachteten Softwaremoduln auf der Seite des jeweiligen Hausgeräts HG einerseits und auf der Seite des jeweiligen Gateways GW andererseits befinden sich, wie in der Zeichnung dargestellt, Spezifikationsdatenkomponenten bzw. -moduln, die eine Steuerungs-Graphen-Softwarekomponente CG, eine Geräteinformationskomponente DI und eine Zustands-Graphen-Softwarekomponente SG umfassen. Auch die Aufgaben und Funktionen dieser Softwarekomponenten werden aus der nachfolgenden Beschreibung näher ersichtlich werden. Dabei sind zwischen den einzelnen Softwarekomponenten durch Pfeile jeweils für die vorliegende Erfindung hauptsächlich maßgebende Wirkverbindungen angegeben, die indessen weitere Wirkverbindungen in dem in der Zeichnung dargestellten Softwaremodul SWM nicht ausschließen.

In dem Gerätemodell-Softwaremodul DM werden Daten, die vom jeweiligen zugehörigen Hausgerät, wie dem Hausgerät HG gesendet werden, bewertet und gespeichert. Die betreffenden Daten werden mittels der Zustands-Graphen-Softwarekomponente SG daraufhin überprüft, ob sie konsistent sind.

In der Zustands-Graphen-Softwarekomponente SG werden die möglichen Zustände der zugehörigen jeweiligen Hausgeräte und deren Übergangsbedingungen spezifiziert. Bei Abweichung von Zustands-Graphen können verschiedene Korrekturmaßnahmen eingeleitet werden, wie z.B. eine Neusynchronisierung mit dem jeweiligen Hausgerät durch Auslesen aller zugehörigen Gerätezustände. Die Zustands-Graphen sind vorzugsweise in der Sprache XML geschrieben, und sie enthalten die in der folgenden Tabelle 1 beschriebenen Elemente.

**Tabelle 1**

| | XML Syntax | Beschreibung |
|---|---|---|
| 1 | Start | |
| 1.1 | <graph> | Beginn des Zustands-Graphs |
| 2 | Zustände | |
| 2.1 | <state> | Der Zustand des übergeordneten Elements weist Gerätezustände für Knoten auf. Das Zustandselement besitzt eine Pflichtattribute-ID, die den Namen des Zustands beschreibt. Ein Zustandselement besitzt Null oder mehr untergeordnete Zielelemente. |
| | <condition></condition> | |
| | <target></target> | |
| | .... | |
| | <target></target> | |
| | </state> | |
| 2.2 | <target> | Das untergeordnete Zielelement ist in einem Zustandselement enthalten und es beschreibt einen Zustand, der von seinem übergeordneten Element erreicht werden kann. |
| | '...' | |
| | </target> | |
| 2.3 | <trigger_statevars> | Der Triggerzustand, der das untergeordnete Element verändert, ist in dem Graphen-Element enthalten und er beschreibt sämtliche Zustandsvariable, die eine Änderung im Zustand des Gerätes triggern können. Üblicherweise ist die einzige Trigger-Zustandsvariable "DeviceState". |
| | <sv></sv> | |
| | ... | |
| | < sv></sv> | |
| | </trigger_statevars> | |
| | | |
| 3 | Einfache Zustände | |
| 3.1 | <condition> | Es ist dieselbe Struktur wie in der Gerätesteuerungsdatei (siehe 6. in der Steuerungs-Graphen-Syntaxspezifikation). |
| | </condition> | |
| | | |
| 4 | Ende | |
| 4.1 | </graph> | Ende des Zustands-Graphen |

Nachstehend wird kurz ein Beispiel im Zusammenhang mit einem Backofen angegeben. Die Definition für den Gerätezustand AUS (OFF) ist gegeben mit: das Gerätestatusobjekt muss den Wert 1 aufweisen; nachfolgende Zustände können Betriebsbereitschaft (Standby), Betrieb (Running) und Inaktivität (inhert) sein.

```
 <state name="off">
   <condition>
     <set statevar="deviceState">
          <value>1</value>
       </set>
     </condition>
     <target>stand-by</target>
     <target>running</target>
     <target>inert</target>
 </state>
```

Die Gerätesteuerungs-Softwarekomponente DC dient der Umsetzung von Funktionsaufrufen höherer Schichten des verwendeten Protokolls in entsprechende EHS-Kommandos. Bei diesen EHS-Kommandos handelt es sich um solche des European-Home-Systems-Standards (EHS-Standard). Dabei kann ein Funktionsaufruf in der Gerätesteuerungs-Softwarekomponente DC bewirken, dass mehrere EHS-Kommandos versandt werden. Diese Kommandos werden als Transaktionen abgearbeitet.

Ferner umfasst die Gerätesteuerungs-Softwarekomponente DC virtuelle Funktionen, die keine direkten Auswirkungen auf das jeweilige reale Hausgerät besitzen. Die jeweiligen Werte werden im Gateway GW vorgehalten und bei Bedarf gesammelt an das jeweilige Hausgerät übertragen. So kann beispielsweise eine Waschparametereingabe in eine Waschmaschine erst dann erfolgen, wenn das Waschprogramm in der betreffenden Waschmaschine gestartet wird.

In der Steuerungs-Graphen-Softwarekomponente CG kann überprüft werden, ob eine bestimmte Aktion im jeweiligen Hausgerätezustand oder mit den angegebenen Parameterkombinationen ausgeführt werden kann. Die Steuerungs-Graphen sind in der Sprache XML geschrieben, und sie enthalten die in der folgenden Tabelle 2 beschriebenen Elemente.

**Tabelle 2**

| | XML Syntax | Beschreibung |
|---|---|---|
| 1 | Start | |
| 1.1 | <control> | Start der Gerätesteuerung |
| 2 | Ausführungen | |
| 2.1 | <quotes> | Ein Zustand bzw. eine Bedingung kann in einer XML-Datei mehrmals genutzt werden. In diesem Falle kann er bzw. sie einmal in dem Ausführungselement beschrieben und dann mit dem zitierten Attribut zitiert werden, was lediglich dessen ID liefert. Dies verkürzt die Objekt-Erzeugungs- und Parsing-Zeit. |
| | <condition> | |
| | </condition > | |
| | .... | |
| | <condition> | |
| | </condition > | |
| | </quotes> | |
| 3 | Zustände | |
| 3.1 | <state> | Das übergeordnete Zustands-Element weist eine Pflicht-Attribut-ID auf, welche den Namen des Zustands beschreibt. Zustands-IDs müssen dieselben sein in der Geräte-Graphen-Datei und in der Geräte-Steuerungs-Datei. Ein Zustandselement weist Null oder mehrere zugelassene Aktions- und zugelassene untergeordnete Wizard-Elemente auf. Ein Zustandselement kann eine Unterordnung eines Steuerungs- oder Spalten-elements sein. Siehe die Beschreibung des letzteren Falles. |
| | <allowedaction> | |
| | </allowedaction> | |
| | .... | |
| | < allowedaction> | |
| | </allowedaction > | |
| | | |
| | <allowedwizard> </allowedwizard> | |
| | | |
| | | |
| | <allowedwizard> | |
| | </allowedwizard> | |
| | | |
| | </state> | |
| | | |
| 4 | Wizards | |
| 4.1 | <wizard> | Das übergeordnete Wizard-Element weist eine Pflicht-Attribut-ID auf, welche in dem zugelassenen Wizard-Element genutzt wird, um ein gerade verfügbares Wizard zu bezeichnen. Ein Wizard-Element weist exakt einen Aufbau auf? Untergeordnetes Element. |
| | <condstruct> | |
| | </condstruct> | |
| | </wizard> | |
| | | |
| | | |
| | | |
| 4.2 | <allowedwizard> | Das zugelassene übergeordnete Wizard-Element enthält eine Folge, die eine ID eines Wizard sein muss. Dieses Element ist in einem Zustandselement enthalten und definiert ein Wizard, welches in dem betreffenden Gerätezustand eingegeben werden kann. |
| | </allowedwizard> | |
| | | |
| | | |
| | | |
| | | |
| 5 | Aktionen | |
| 5.1 | <action> | Das übergeordnete Aktionselement weist eine Pflicht-Attribut-ID auf, welche die ID der Aktion beschreibt. Aktions-IDs müssen dieselben in der Metadaten-Datei und in der Gerätesteuerungs-Datei sein. Ein Aktionselement kann ein ihm zugehöriges untergeordnetes Zustands- bzw. Bedingungselement enthalten. Der Zustand bzw. die Bedingung spezifiziert, wann die Aktion für den gegenwärtigen Zustand (das übergeordnete Element) aufgerufen werden kann. |
| | <condition> | |
| | </condition> | |
| | </action> | |
| | | |
| | | |
| | | |
| | | |
| | | |
| | | |
| | | |
| 5.2 | <arg> | Das Argument des übergeordneten Elements, dessen Inhaltstyp als Bereich oder konstant festgelegt werden kann. Die Semantik des Elements liegt darin, dass das gegebene Argument lediglich die in seinem übergeordneten Element beschriebenen Werte annehmen kann. Es hat eine Pflicht-Attribut-ID, die eine eindeutige Identifikation für das Argument bezeichnet. Die IDs der entsprechenden Argumente der Aktionen müssen in der Metadaten-XML und in der Gerätesteuerungs-XML gleich sein. |
| | <set><set> | |
| | or | |
| | <range></range> | |
| | or | |
| | <const></const> | |
| | </arg> | |
| | | |
| | | |
| | | |
| | | |
| | | |
| | | |
| 5.3 | <allowedaction> | Das zugelassene übergeordnete Aktionselement enthält eine Folge, die eine ID einer Aktion sein muss. Aktions-IDs müssen in der Metadaten-Datei und in der Gerätesteuerungs-Datei dieselben sein. Dieses Element ist in einem Zustandselement enthalten und definiert eine Aktion, die in dem betreffenden Gerätezustand von ferner Stelle aufgerufen werden kann. |
| | </allowedaction> | |
| | | |
| | | |
| | | |
| | | |
| | | |
| | | |
| 6 | Einfache Zustände/ Bedingungen | |
| 6.1 | <condition> | Der Zustand bzw. die Bedingung des übergeordneten Elements wird durch Anwendung eines logischen "oder" oder eines logischen "und" auf zwei oder mehr Boole'sche Terme gebildet. Ein Zustand bzw. eine Bedingung kann gerade einen einzigen Term enthalten. In diesem Falle ist die Bedingung erfüllt, falls der Term den Wert "wahr" besitzt. Ein Term kann ein Ausdruck, ein Bereich oder eine Festlegung sein. |
| | <and></and> | |
| | or | |
| | <or></or> | |
| | or | |
| | <expr></expr> | |
| | or | |
| | <range></range> | |
| | or | |
| | <set></set> | |
| | </condition> | |
| | | |
| 7 | Bedingte Strukturen | |
| 7.1 | <condstruct> | Das bedingte übergeordnete Strukturelement wird durch eine Anzahl von logischen Spalten gebildet, deren jede entweder eine Aktion mit einem Argument oder einen zustandsvariablen Bereich/Wert/ Satz/ Ausdruck repräsentiert. Das Zykluselement beschreibt einen gültigen Pfad durch die Spalten-Zustände. |
| | <column></column> | |
| | ... | |
| | <column></column> | |
| | <cycle></cycle> | |
| | <cycle></cycle> | |
| | </condstruct> | |
| | | |
| 7.2 | <column> | Das übergeordnete Spaltenelement, das jeweilige Element in der Spalte, beschreibt einen Satz von zugelassenen bzw. zulässigen Werten für eine Aktion oder eine Zustandsvariable. Dieser Satz wird durch ein Zustandselement repräsentiert. Sämtliche Elemente in einer Spalte beschreiben dieselbe Aktion mit dem Argument oder der Zustandsvariablen. Jeder Zustand in der Spalte weist eine Pflicht-Attribut-ID auf, welche bei der Beschreibung der gültigen Sätze von Zuständen für die bedingte Struktur in dem Zykluselement genutzt wird. Das Spaltenelement weist ein Pflichtattribut auf: ID. Es muss die ID einer Aktion oder eines Attributs sein. Aktions-IDs und Argument-IDs müssen in der Metadaten-Datei und in der Gerätesteuerungs-Datei dieselben sein. |
| | <domain></domain> | |
| | <state></state> | |
| | ··· | |
| | </column> | |
| | | |
| | | |
| | | |
| | | |
| | | |
| | | |
| | | |
| | | |
| | | |
| | | |
| | | |
| | | |
| 7.3 | <cycle> | Das übergeordnete Zykluselement enthält einen Satz. Das Satzelement muss eine gültige Folge von Aktionen und/oder Bedingungen der Zustandsvariablen innerhalb der bedingten Struktur enthalten. Die Zustände im Zyklus können in irgendeiner Reihenfolge durchlaufen werden, und jeder der betreffenden Zustände kann übersprungen werden. |
| | <set></set> | |
| | </cycle> | |
| | | |
| | | |
| | | |
| | | |
| | | |
| | | |
| 7.4 | <state> | Die Zustände innerhalb einer Spalte sind logische Zustände. Jeder Zustand repräsentiert einen Wertebereich für die Zustandsvariable oder das Eingangs-Argument der Spalte, deren Mitglied er ist. |
| | </state> | |
| | | |
| | | |
| 8 | Ausdrücke | |
| 8.1 | <domain> | Das übergeordnete Bereichselement; ein Bereich bezeichnet eine Referenz für den Wert einer Zustandsvariablen oder eines Aktionseingangsarguments. Ob es eine Referenz für eine Zustandsvariable oder ein Eingangsargument ist, wird aus dem Typ-Attribut erhalten (Typ="sv"\| "arg"). Falls der Typ "sv" ist, muss das ID-Element die ID der Referenz-Zustandsvariablen enthalten. Das Aktions-ID-Element wird weggelassen. Falls der Typ gegeben ist mit "arg", muss das ID-Element die ID des Referenz-Eingangsarguments enthalten, und die Aktions-ID muss die ID der betreffenden Aktion enthalten. |
| | <id></id> | |
| | <actionid> | |
| | </actionid> | |
| | </domain> | |
| | | |
| | | |
| | | |
| | | |
| | | |
| | | |
| | | |
| | | |
| | | |
| | | |
| 8.2 | <expr> | Das übergeordnete Ausdruckelement besteht aus zwei Elementen: Domäne und (Domäne oder Konstante). Eine Domäne bezeichnet eine Referenz für den Wert einer Zustands-variablen oder eines Aktionsarguments. Eine Konstante repräsentiert einen Wert. Die beiden Teile des Ausdrucks können als zwei Operanden eines Vergleichsoperators betrachtet werden. Der Operator-typ wird dem 'Operator'-Attribut entnommen. Er weist einen der folgenden Werte auf: gt-größer, ge-größer oder gleich, Is-kleiner, le-kleiner oder gleich, eq-gleich, ne-nicht gleich. |
| | <domain></domain> | |
| | <domain></domain> | |
| | or | |
| | <const></const> | |
| | </expr> | |
| | | |
| | | |
| | | |
| | | |
| | | |
| | | |
| 8.3 | <sv>"name"</sv> | Das Zustandsvariable-Element, dessen Inhaltstyp gegeben ist mit #PCDATA. Es muss die ID einer |
| | | Zustandsvariablen enthalten. Die IDs der Zu- |
| | | standsvariablen müssen in der Metadaten-Datei |
| | | und in der Gerätesteuerungs-Datei dieselben sein. |
| 8.4 | <const>"value"</const> | Das Konstante-Element, dessen Inhaltstyp gegeben ist mit #PCDATA, muss einen Wert enthalten, der durch die Standard-Javaklassen parsefähig ist. Der andere Operandentyp bestimmt den Typ des Werts: die Zustandsvariable des Eingangsarguments. |
| | | |
| | | |
| | | |
| | | |
| | | |
| 9 | Wertebereiche | |
| 9.1 | <range> | Ein Wertebereich, der durch einen Minimalwert, einen Maximalwert und einen Schrittwert beschrieben ist. Beispielsweise definieren min=10, max=60, Schritt=10 hier {10,20,30,40,50,60}. |
| | <min>"..."</min> | |
| | <max>"..."</max> | |
| | <step>"..."</step> | |
| | </range> | |
| 9.2 | <set> | Definiert einen Werte-Satz |
| | <el></el> | |
| | <el></el> | |
| | </set> | |
| | | |
| 9.3 | <value> | Definiert einen einfachen Wert |
| | "value" | |
| | </value> | |
| 10 | Ende | |
| 10.1 | </control> | Ende der Gerätesteuerung. |

Nachstehend wird ein Beispiel für einen Backofen angegeben. Die erlaubten Funktionen für Gerätestatus sind gegeben mit Betriebsbereitschaft (Standby) und Inaktivität (Inert)

```
 <state id ="stand-by">
   <allowedaction id= "set InertOven0"/>
   <allowedaction id= "set InertCooker0"/>
   <allowedaction id= "set DeviceName"/>
   <allowedaction id= "set Language0"/>
   <allowedaction id= "set RealTimeClock0"/>
   <allowedaction id= "set HeatingMode"/>
   <allowedaction id= "set HeatingModeComplete0"/>
   <allowedaction id= "set Temperature"/>
   <allowedaction id= "set Duration"/>
   <allowedaction id= "set DurationWAP"/>
   <allowedaction id= "set FinishTime"/>
   <allowedaction id= "set FinishTimeWAP"/>
   <allowedaction id= "set BasicSettings0"/>
   <allowedaction id= "set ChildProofLock0"/>
   <allowedaction id= "set HobDeviceName"/>
   <allowedaction id= "set ClockPresentation0"/>
   <allowedaction id= "set AdjustDuration0"/>
   <allowedaction id= "set AcousticSignaIDuration0"/>
   <allowedaction id= "fullWizard"/>
 </state>
```

```
 <state id ="inert">
   <allowedaction id= "set DeviceName"/>
   <allowedaction id= "set HobDeviceName"/>
   <allowedaction id= "set InterCooker0"/>
 </state>
```

Nunmehr wird ein Beispiel für einen Ofen angegeben; es gilt die Regel, wann Aktion" reduceTempLevels0" ausgeführt werden kann
Regel:
wenn Argument "settingA" von Aktion "reduceTempLevels0" kleiner als Wert von Status Variable "targetSetting" ist UND Status Variable "Heating Mode" gleich den Werten 7,8 oder 9 ist.

```
 <action id="reduceTempLevelsO">
  <condition>
   <and>

    <expr operator='"1s">
      <domain type="arg">
        <id>settingA</id>
        <actionid>reduceTempLevels0</actionid>
    </domain>
    <domain type="sv">
        <id>targetSetting</id>
        </domain>
    </expr>

    <set>
      <domain type="sv">
        <id>heatingMode</id>
      </domain>
      <e1>7</el>
      <e1>8</el>
      <e1>9</el>
    </set>

   </and>
  </condition>
 </action>
```

Nachstehend wird noch auf die Steuereinheits-Architekturbrücke CB eingegangen, die eine zentrale Rolle in der jeweiligen softwaretechnischen Abbildung des Geräteverhaltens eines realen Hausgeräts, wie des Hausgeräts HG, für das Gateway GW spielt. Die betreffende Steuereinheits-Architekturbrücke CB stellt im übrigen die Funktionen des jeweiligen Hausgeräts in abstrahierter Form, das heißt unabhängig vom EHS-Protokoll anderen Diensten am Gateway GW zur Verfügung.

Die Funktionen des jeweiligen Hausgeräts, wie des Hausgeräts HG werden in "Status-Variable" und "Aktionen" unterteilt. Eine Status-Variable umfasst einen bestimmten Gerätestatus, z.B. einen Gerätezustand (DeviceState), eine Endzeit (FinishTime) oder eine Zieltemperatur (TargetTemperature). Der jeweilige Wert kann aus einem zugehörigen Speicher ausgelesen werden und einem bestimmten Interessenten bei einer Zustandsänderung zwecks Benachrichtigung zugeführt werden. Hausgeräte-Ereignisse, wie z.B. die Beendigung eines Programms, werden ebenfalls durch Status-Variable abgebildet.

Unter den zuvor erwähnten Aktionen werden Funktionen des jeweiligen Hausgerätes verstanden, die vom Gateway GW ausgeführt werden können, wie z.B. das Einstellen einer Zieltemperatur (SetTargetTemperature) und der Betriebsbeginn (Start). Eine Aktion kann Parameter benötigen, und sie meldet zurück, ob sie erfolgreich abgeschlossen werden konnte oder nicht.

Die Steuereinheits-Architekturbrücke CB benutzt die Datei der Geräteinformationskomponente DI und stellt die in dieser enthaltenen Informationen zur Verfügung, wie z.B. einen Wertebereich und den Typ von Status-Variablen oder Parametern, etc.

Abschließend sei noch auf die gerade erwähnte Geräteinformationskomponente DI eingegangen. In dieser Komponente DI sind sämtliche Informationen über verfügbare Status-Variable und Aktionen des jeweiligen Hausgeräts, wie des Hausgeräts HG enthalten. Im Einzelnen enthält der ebenfalls in der Sprache XML geschriebene Steuerungsgraph die in der folgenden Tabelle 3 beschriebenen Elemente.

**Tabelle 3**

| | XML Syntax | Beschreibung |
|---|---|---|
| 1 | Start | |
| 1.1 | <unit> | Start der Konfiguration |
| 2 | CU-Information | |
| 2.1 | <name>"name"</name> | Name der Steuereinheit |
| 2.2 | <description>"..." | Beschreibungsinformation |
| | </description> | |
| 2 | Zustands-Variable | |
| 2.1 | <statevar> | Definieren einer Zustandsvariablen. Dieses Element besitzt eine PHicht-Attribut-ID, die die Zustandsvariable definiert. |
| 2.1.1 | <name>"..."</name> | Definieren eines Namens der Zustandsvariablen |
| 2.1.2 | <description>"..." | Beschreibungsinformation |
| | </description> | |
| 2.1.3 | <cardinality>"..." | Definieren der Kardinalität (es kann lediglich |
| | </cardinality> | eine einzige benutzt werden) |
| 2.1.4 | <type>"..."</type> | Definieren des Typs; er kann sein: int, float, char, byte, lang, kurz, Folge |
| 2.1.5 | <default>"..." </default> | Definieren des Vorbelegungswertes |
| 2A | Zugelassene Werte | |
| 2.1.6 | <allowed_values> | Spezifizieren der zugelassenen Werte dieser Zustandsvariablen |
| 2.1.6.1 | <value>"..."</value> | Definieren eines Wertes. Dieses Element besitzt ein Pflicht-Attributetikett, welches das Etikett für diesen Wert definiert. |
| 2.1.6.2 | ... | Definieren von mehr Werten... |
| 2.1.6.3 | ... | |
| 2.1.7 | </allowed_values> | Ende der zugelassenen Werte |
| 2B | Wertebereich | |
| 2.1.8 | <min>'"...'"</min> | Spezifizieren des Min-Wertes dieser Zustandsvariablen |
| 2.1.9 | <max>"..."></max> | Spezifizieren des Max-Wertes dieser Zustandsvariablen |
| 2.1.10 | <step>"..."</step> | Spezifzieren des Schrittes dieser Zustandsvariablen |
| | | |
| 2.1.11 | </statevar> | Ende der Definition der Zustandsvariablen |
| 3 | Aktionen | |
| 3.1 | <action> | Definieren einer Aktion. Dieses Element weist ein Pflicht-Attribut-ID auf, welches die Aktion definiert. |
| 3.1.1 | <name>"..."</name> | Definieren eines Namens der Aktion |
| 3.1.2 | <description>"..." | Beschreibungsinformation |
| | </description> | |
| 3.1.3 | <input> | Spezifizieren der Eingangsargumente |
| 3.1.3.1 | <argument> | Spezifizieren des Arguments. Dieses Element weist eine Pflicht-Attribut-ID auf, welche das Argument definiert. |
| 3.1.3.1.1 | <name>"...'"</name> | Definieren eines Namens der Zustandsvariablen |
| 3.1.3.1.2 | <desaiption>"..." | Beschreibungsinformation |
| | </description> | |
| 3.1.3.1.3 | <cardinality>"...." </cardinality> | Definieren der Kardinalität (es kann lediglich eine einzige benutzt werden) |
| 3.1.3.1.4 | | Der Rest der Argument-Beschreibung folgt der Beschreibung der Zustands-Variablen |
| 3.1.3.2 | </argument> | Ende der Argumentbeschreibung |
| 3.1.4 | </input> | Ende der Eingabe der Argumentbeschreibung |
| 3.2 | </action> | Ende der Aktionsbeschreibung |
| 4 | Ende | |
| 4.1 | </unit> | Ende der Konfiguration |

Nachstehend sei noch am Beispiel eines Ofens die Definition der Status-Variable "device State" betrachtet:

```
 <statevar id="deviceState">
   <name>Device State</name>
   <description>The device state of the Oven</description>
   <type>java.lang.lnteger</type>
   <allowed_values>
     <value label="Off">1</value>
     <value label="Stand-By">2</value>
     <value label="Programmed">3</value>
     <value label=,"ProgrammedWaitingToStart">4</value>
     <value label="Running">5</value>
     <value label="Paused">6</value>
     <value label="Failure">8</value>
     <value label="EndProgrammed">7</value>
     <value label="Inert">129</value>
   </allowed_values>
 </statevar>
```

Die Definition der Aktion "setHeadingModeComplete0" geschieht beispielsweise wie folgt:

```
 <action id="setHeadingModeComplete0">
   <name>Set Heating Mode Complete</name>
   <input>
     <argument id="fastPreheating">
     <name>Fast Preheating</name>
     <type>java.lang.Boolean</type>
     </argument>
     <argument id="heatingModeA">
     <name>Heating Mode</name>
     <type>java.lang.Integer</type>
     <min>0</min>
     <max>21 </max>
     <step> 1 </step>
     </argument>
     <argument id="targetTempA">
     <name>Target Temp/Setting</name>
     <type>java. lang.Integer</type>
     <min>0</min>
     <max>300</max>
     <step>1</step>
     </argument>
     <argument id="durationA">
     <name>Duration Time in Minutes</name>
     <type>java.lang.Integer</type>
     <min>0</min>
     <max>1439</max>
     <step>1</step>
     </argument>
       <argument id="finishTimeA">
       <name>Finish Time in Minutes</name>
       <type>java.lang.integer</type>
       <min>0</min>
       <max>1439</max>
       <step>1 </step>
   </argument>
   </input>
 </action>
```

Anhand der vorstehenden Erläuterungen der das Softwaremodul SWM bildenden Softwarekomponenten dürfte ersichtlich geworden sein, dass in dem betreffenden Softwaremodul SWM die softwaretechnische Abbildung des Geräteverhaltens eines realen Hausgerätes, wie des in der Zeichnung dargestellten Hausgerätes HG in einem Modell erfolgt und dass dieses Modell hinsichtlich der das jeweilige Geräteverhalten angebenden Geräteparameter lediglich deklarativ beschrieben wird bzw. ist.

### Bezugszeichenliste

- CB: Steuereinheits-Architekturbrücke
- CG: Steuerungs-Graphen- Softwarekomponente
- DC: Gerätesteuerungs-Software
- DI: Geräteinformstionskomponente
- DM: Gerätemodell-Softwaremodul
- GW: Gateway
- HG: Hausgerät
- NET: Komminikationsnetz
- PC: Personalcomputer
- SG: Zustands-Graphen-Softwarekomponente
- SWM: Softwaremodul
- WA: Wohnanlage

## Patentansprüche

1. Verfahren zur softwaretechnischen Abbildung des Geräteverhaltens eines realen Hausgerätes in einem Modell, welches mit dem betreffenden Hausgerät über eine bidirektionale Verbindungseinrichtung verbunden ist, über die aktuelle Zustände des betreffenden Hausgerätes an das Modell übertragen und Aktionen am Hausgerät ausgeführt werden, **dadurch gekennzeichnet, dass** das genannte Modell (SWM) hinsichtlich der das Geräteverhalten angebende Geräteparameter mittels Graphenstrukturen lediglich derart deklarativ beschrieben wird, dass Gerätezustände und Übergangsbedingungen zwischen Gerätezuständen des betreffenden Hausgerätes (HG) in einer Status-Graphen-Software festgehalten werden, dass mittels einer Steuerungs-Graphen-Software überprüft wird, ob eine bestimmte Aktion beim jeweiligen Gerätezustand des betreffenden Hausgerätes (HG) oder mit angegebenen Parameterkombinationen ausführbar ist, und dass eine Geräteinformationssoftware sämtliche Informationen über verfügbare Status-Variable und Aktionen des betreffenden Hausgerätes (HG) enthält.

2. Verfahren nach Anspruch 1, **dadurch gekennzeichnet, dass** die softwaretechnische Abbildung durch gerätespezifische Komponenten und durch Spezifikationen realisiert wird, welche die funktionalen Eigenschaften und damit das Geräteverhalten des betreffenden Hausgerätes (HG) unter verschiedenen Aspekten beschreiben.

3. Verfahren nach Anspruch 2, **dadurch gekennzeichnet, dass** mittels der genannten Spezifikationen Verknüpfungen (Logik) der Gerätesteuerung des betreffenden Hausgerätes (HG) abgebildet werden.

4. Vorrichtung zur softwaretechnischen Abbildung des Geräteverhaltens eines realen Hausgeräts in einem Modell, welches zwischen dem betreffenden Hausgerät und einem Gateway gebildet ist, dem gegebenenfalls eine Mehrzahl von Hausgeräten zugehörig ist und über das Funktionszustände des jeweiligen Hausgeräts abfragbar und/oder Informationsdaten zu dem jeweiligen Hausgerät übertragbar sind, **dadurch gekennzeichnet, dass** das genannte Modell (SWM) hinsichtlich der das Geräteverhalten angebende Geräteparameter lediglich deklarativ beschrieben ist und aus einer Software-Komponente (CB) zum genannten Gateway (GW) hin und durch eine Software-Komponente (DM, DC) zum jeweiligen Hausgerät (HG) hin sowie durch eine Spezifikationsdatenkomponente (SG, DI, CG) zwischen den beiden Software-Komponenten (CB; DM, DC) aufgebaut ist, und dass die genannte Spezifikationsdatenkomponente (SG, DI, CG) eine Steuerungs-Graphen-Software-komponente (CG), in der überprüft werden kann, ob eine bestimmte Aktion im jeweiligem Hausgerätezustand oder mit den angegebenen Parameterkombinationen ausgeführt werden kann, eine Geräteinformationskomponente (DI) und eine Zustands-Graphen-Softwarekomponente (SG) umfasst.

5. Softwaremodul zur softwaretechnischen Abbildung des Geräteverhaltens eines realen Hausgerätes in einem Modell, welches mit dem betreffenden Hausgerät über eine bidirektionale Verbindungseinrichtung verbindbar ist, über die aktuelle Zustände des betreffenden Hausgerätes an das Modell übertragbar und Aktionen am Hausgerät ausführbar sind, **dadurch gekennzeichnet, dass** das genannte Modell (SWM) hinsichtlich der das Geräteverhalten angebende Geräteparameter mittels Graphenstrukturen lediglich derart deklarativ beschrieben ist, dass Gerätezustände und Übergangsbedingungen zwischen Gerätezuständen des betreffenden Hausgerätes (HG) in einer Status-Graphen-Software festgehalten sind, dass mittels einer Steuerungs-Graphen-Software überprüfbar ist, ob eine bestimmte Aktion beim jeweiligen Gerätezustand des betreffenden Hausgerätes (HG) oder mit angegebenen Parameterkombinationen ausführbar ist, und dass eine Geräteinformationssoftware sämtliche Informationen über verfügbare Status-Variable und Aktionen des betreffenden Hausgerätes (HG) enthält.

6. Softwaremodul nach Anspruch 5, **dadurch gekennzeichnet, dass** die softwaretechnische Abbildung durch gerätespezifische Komponenten und durch Spezifikationen realisiert ist, welche die funktionalen Eigenschaften und damit das Geräteverhalten des betreffenden Hausgerätes (HG) unter verschiedenen Aspekten beschreiben.

7. Softwaremodul nach Anspruch 6, **dadurch gekennzeichnet, dass** mittels der genannten Spezifikationen Verknüpfungen (Logik) der Gerätesteuerung des betreffenden Hausgerätes (HG) abgebildet sind.

## Claims

1. Method of software representation of the appliance behaviour of an actual domestic appliance in a model, which is connected with the respective domestic appliance by way of a bidirectional connecting device, by way of which the instantaneous states of the respective domestic appliance are transmitted to the model and actions at the domestic appliance are executed, **characterised in that** the said model (SWM) is described with respect to the appliance parameters, which indicate the appliance behaviour, by means of graph structures merely declaratively in such a manner that appliance states and transition conditions between appliance states of the respective domestic appliance (HG) are retained in a status graph software, that it is checked by means of a control graph software whether a specific action can be executed in the respective appliance state of the respective domestic appliance (HG) or with indicated parameter combinations and that an appliance information software contains all data about available status variables and actions of the respective domestic appliance (HG).

2. Method according to claim 1, **characterised in that** the software representation is realised by appliance-specific components and by specifications which describe the functional characteristics and thus the appliance behaviour of the respective domestic appliance (HG) from different aspects.

3. Method according to claim 2, **characterised in that** logical linkings of the appliance control of the respective domestic appliance (HG) are represented by means of the said specifications.

4. Device for software representation of the appliance behaviour of an actual domestic appliance in a model, which is formed between the respective domestic appliance and a gateway, which in a given case belongs to a plurality of domestic appliances and by way of which functional states of the respective domestic appliance can be interrogated and/or information data can be transmitted to the respective domestic appliance, **characterised in that** the said model (SWM) is described with respect to the appliance parameters, which indicate the appliance behaviour, merely declaratively and is constructed from a software component (CB) towards the said gateway (GW) and by a software component (DM, DC) towards the respective domestic appliance (HG) as well as by specification data components (SG, DI, CG) between the two software components (CB; DM, DC), and that the said specification data component (SG, DI, CG) comprises a control graph software component (CG), in which it can be checked whether a specific action can be executed in the respective domestic appliance state or with the indicated parameter combinations, an appliance information component (DI) and a state graph software component (SG).

5. Software module for software representation of the appliance behaviour of an actual domestic appliance in a model, which is connectible with the respective domestic appliance by way of a bidirectional connecting device, by way of which instantaneous states of the respective domestic appliance can be transmitted to the model and actions at the domestic appliance executed, **characterised in that** the said model (SWM) is described with respect to the appliance parameters, which indicate the appliance behaviour, by means of graph structures merely declaratively in such a manner that appliance states and transfer conditions between appliance states of the respective domestic appliance (HG) are retained in a status graph software, that it is checkable by means of a control graph software whether a specific action can be executed in the respective appliance state of the respective domestic appliance (HG) or with indicated parameter combinations and that an appliance information software contains all data about available status variables and actions of the respective domestic appliance (HG).

6. Software module according to claim 5, **characterised in that** the software representation is realised by appliance-specific components and by specifications which describe the functional characteristics and thus the appliance behaviour of the respective domestic appliance (HG) from different aspects.

7. Software module according to claim 6, **characterised in that** logical interlinkings of the appliance control of the respective domestic appliance (HG) are represented by means of the said specifications.

## Revendications

1. Procédé destiné à la représentation logicielle du comportement d'un appareil ménager réel dans un modèle qui est relié à l'appareil ménager concerné par un dispositif de liaison bidirectionnel, par lequel des états actuels de l'appareil ménager concerné sont transmis au modèle et des actions sont effectuées sur l'appareil ménager, **caractérisé en ce que** le modèle (SWM) cité est décrit uniquement de façon déclarative au moyen des structures de graphes en ce qui concerne les paramètres d'appareil indiquant le comportement de l'appareil, de telle sorte que des états d'appareil et des conditions de transition entre des états d'appareil de l'appareil ménager concerné (HG) sont consignés dans un logiciel de graphes d'état, on vérifie au moyen d'un logiciel de graphes de commande si une action définie peut être exécutée avec l'état d'appareil respectif de l'appareil ménager (HG) ou avec des combinaisons de paramètres indiquées et qu'un logiciel d'information d'appareil contient toutes les informations concernant des variables d'état disponibles et des actions de l'appareil ménager (HG) concerné.

2. Procédé selon la revendication 1, **caractérisé en ce que** la représentation logicielle est réalisée par des composants spécifiques à l'appareil et par des spécifications, qui décrivent les propriétés fonctionnelles et donc le comportement de l'appareil ménager (HG) concerné sous différents aspects.

3. Procédé selon la revendication 2, **caractérisé en ce que** des associations (logique) de l'appareil de commande de l'appareil ménager (HG) concerné sont reproduites au moyen des spécifications citées.

4. Dispositif pour la représentation logicielle du comportement d'un appareil ménager réel dans un modèle, qui est formé entre l'appareil ménager concerné et une passerelle, à laquelle appartient le cas échéant une pluralité d'appareils ménagers et par laquelle les états de fonction de l'appareil ménager respectif peuvent être interrogés et/ou des données d'information peuvent être transmises à l'appareil ménager respectif, **caractérisé en ce que** ledit modèle (SWM) est décrit de façon uniquement déclarative en ce qui concerne les paramètres d'appareil indiquant le comportement de l'appareil et est construit à partir d'un composant de logiciel (CB) en direction de ladite passerelle (GW) et par un composant de logiciel (DM, DC) en direction de l'appareil ménager (HG) respectif ainsi que par un composant de données de spécification (SG, DI, CG) entre les deux composants de logiciel (CB ; DM, DC) et **en ce que** ledit composant de données de spécification (SG, DI, CG) est un composant de logiciel de graphes de commande (CG), dans lequel on vérifie si une action définie peut être exécutée dans l'état d'appareil ménager concerné ou avec les combinaisons de paramètres indiquées, comprend une composante d'information d'appareil (DI) et une composante de logiciel de graphes d'état (SG).

5. Module de logiciel pour la représentation logicielle du comportement d'un appareil ménager dans un modèle qui peut être relié à l'appareil ménager concerné par un dispositif de liaison bidirectionnel, par lequel des états actuels de l'appareil ménager concerné peuvent être transmis au modèle et des actions peuvent être exécutées sur l'appareil ménager, **caractérisé en ce que** ledit modèle (SWM) est décrit en ce qui concerne les paramètres d'appareil indiquant le comportement de l'appareil au moyen de structures de graphes uniquement de façon déclarative de telle sorte que des états d'appareil et des conditions de transition entre des états d'appareil de l'appareil ménager (HG) concerné sont consignés dans un logiciel de graphes d'état, qu'on peut vérifier au moyen d'un logiciel de graphes de commande si une action définie peut être exécutée avec l'état d'appareil respectif de l'appareil ménager (HG) concerné ou avec des combinaisons de paramètres indiquées et qu'un logiciel d'information d'appareil contient toutes les informations relatives aux variables d'état disponibles et aux actions de l'appareil ménager (HG) concerné.

6. Module de logiciel selon la revendication 5, **caractérisé en ce que** la représentation logicielle est effectuée par des composants spécifiques à l'appareil et par des spécifications qui décrivent les propriétés fonctionnelles et donc le comportement de l'appareil ménager (HG) concerné sous différents aspects.

7. Module de logiciel selon la revendication 6, **caractérisé en ce que** des liaisons (logique) de la commande d'appareil de l'appareil ménager (HG) concerné sont reproduites au moyen desdites spécifications.
